# EUROPEAN PATENT SPECIFICATION

(11) **EP 2 498 439 B1**
(45) Date of publication and mention of the grant of the patent: **06.03.2019**
(21) Application number: 10840421.1
(22) Date of filing: 27.09.2010
(51) Int. Cl.: G06F 9/445, H04B 10/00, H04B 10/03, H04B 10/272, H04L 12/24, H04Q 11/00

(54) **PROTECTION METHOD AND SYSTEM UNDER ABNORMAL CONDITIONS IN UPGRADE GIGABIT PASSIVE OPTICAL NETWORK TERMINAL**
SCHUTZVERFAHREN UND -SYSTEM UNTER IRREGULÄREN BEDINGUNGEN IN EINEM UPGRADE-GIGABIT-ENDGERÄT FÜR EIN PASSIVES OPTISCHES NETZWERK
PROCÉDÉ ET SYSTÈME DE PROTECTION DANS DES CONDITIONS ANORMALES DANS UN TERMINAL DE MISE À NIVEAU DE RÉSEAU OPTIQUE PASSIF GIGABIT

(30) Priority: 31.12.2009 CN 200910217522
(43) Date of publication of application: 12.09.2012
(73) Proprietor: ZTE Corporation, Shenzhen, Guangdong 518057 (CN)
(72) Inventor: ZHANG, Yangchun, Guangdong 518057 (CN)
(74) Representative: Nikolov, Nikolay Dontchev
(86) International application number: PCT/CN2010/077345
(87) International publication number: WO 2011/079632

(56) References cited:
- CN-A- 1 859 182
- CN-A- 1 859 182
- CN-A- 101 217 412
- CN-A- 101 217 412
- CN-A- 101 414 923
- CN-A- 101 414 923
- CN-A- 101 436 138
- CN-A- 101 436 138

## Description

### Technical Field

The present invention relates to a Gigabit Passive Optical Network (GPON) technology, and particularly, to a protecting method and system for abnormal conditions in the upgrade of a GPON terminal, as described in the preamble of the independent claims. The features of the preamble of the independent claims are known from CN101217412A and CN101436138A.

Chinese patent document CN101217412A discloses a method for batch upgrading of an optical network terminal (ONT) in a Gigabit Passive Optical Network (GPON), wherein upgrades are split in segments that are delivered along with a checksum to test the integrity and correctness of the delivered upgrade.

Chinese patent document CN101438138 discloses a control method for upgrading and dynamically rolling back software in equipment. The software is acquired, checked, tested for correctness and then the upgraded software is set as the current version.

### Background of the Related Art

With the development of the broadband access technology, the GPON technology as a point-to-multipoint optical network access technology is gradually becoming a research hotspot of the broadband access technology.

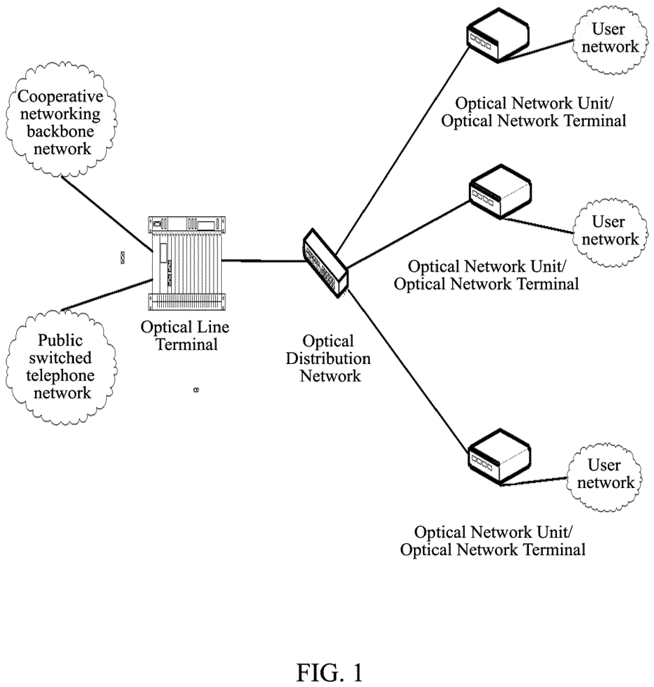

FIG. 1 is a network topological structure of a typical GPON system, and as shown in FIG. 1, the GPON system mainly includes: an Optical Line Terminal (OLT), an Optical Distribution Network (ODN) and Optical Network Unit/Optical Network Terminal (ONU/ONT). Wherein, the ONU/ONT is user side equipment and located at the place of user in spatial position, thus the ONUs/ONTs are usually dispersive. Therefore, a remote upgrade for the ONU/ONT becomes an indispensable function in maintenance of the whole GPON system.

G.984.4 standard defines a unified process and methods under the OMCI (ONT Management and Control Interface) protocol for the remote upgrade the software of the ONUs/ONTs in the GPON system.

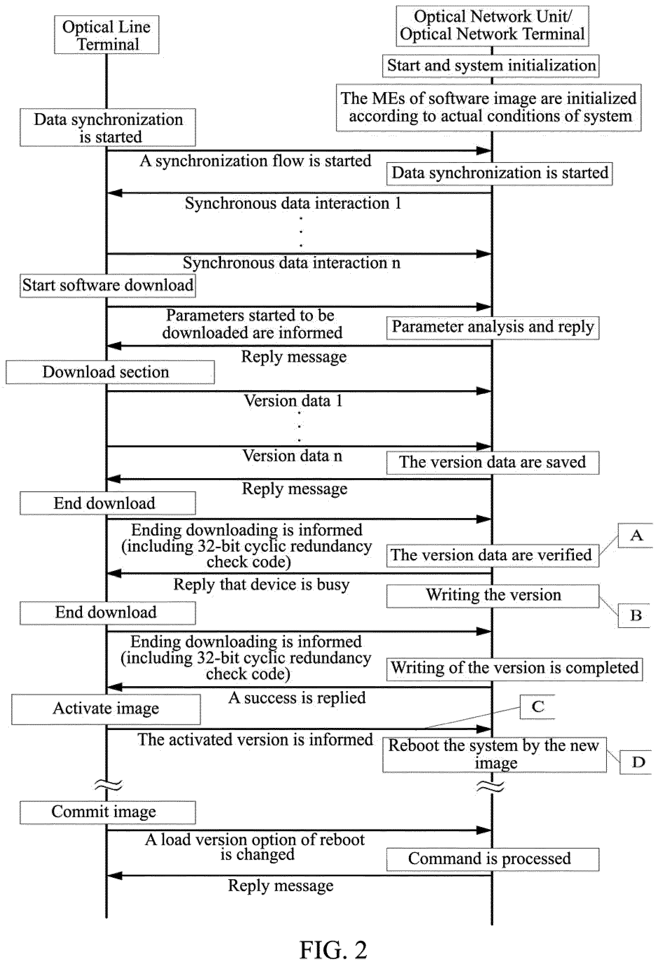

FIG. 2 is a sequence diagram related to an ONU/ONT upgrade process refined according to the G.984.4 standard. It can be seen from FIG. 2 that, relevancies between messages in sequence and between upgrade steps of the ONU/ONT itself are stronger, once a certain message has a time sequence disorder or a certain step has an error, it will have an unpredictable influence on the whole upgrade process, and even cause paralysis to user network. Especially at locations of A, B, C and D labeled in the diagram, since more sessions will happened between the ONU/ONT and the OLT at these locations, and the locations are key points of upgrade state transition, in addition, actions executed by the ONU/ONT are comparatively frequent, therefore, probability of occurrence of abnormal conditions is extremely high.

As mentioned above, since the ONU/ONT itself has a feature of area dispersion, and is important to act as a user access terminal, whether the ONU/ONT upgrades successfully is directly linked to whether the terminal and even the user network can work normally. Therefore, how to improve success rate and accuracy of updating the ONU/ONT becomes a problem required to be solved urgently.

### Summary of the Invention

In view of this, the main object of the present invention is to provide a protecting method and system for abnormal conditions in upgrade of a GPON terminal under the OMCI protocol, which improves success rate and accuracy of the ONU/ONT upgrade and meanwhile guarantees that various upgrade commands of an OLT defined by the standard are responded correctly.

The features of the method and system according to the present invention are defined in the independent claims.

A protecting method for abnormal conditions in an upgrade of a Gigabit Passive Optical Network (GPON) terminal, comprises:
performing analysis in sequence of integrity, correctness and validity of a new version file downloaded to the GPON terminal, and after determining that the new version file is integral, correct and valid, writing the new version file;
determining a verification for the new version according to an activation process of an Optical Line Terminal (OLT), and completing the upgrade for the new version of the GPON terminal.

In the above scheme, the analysis of integrity of the new version file comprises: saving the size of the new version file, and configuring a download Integrality-Flag of the new version file as False; after receiving the "End download" OMCI message, judging whether a size of the downloaded new version file is identical with a size of the saved new version file, if yes, configuring the download Integrality-Flag of the new version as True, and considering that the downloaded new version file is integral, if not, determining that data of the new version file are not integral, replying the OLT with "command processing error", and the ONU/ONT ending the upgrade process.

In the above scheme, the analysis of validity of the new version file comprises: according to a maximum size of a new version file to be written permitted by the ONU/ONT, determining that a size of the new version file to be written is suitable; according to a magic number in the file, determining a legality of the new version file; performing verification on data of a kernel area of the new version file, and preliminarily determining that the data of the new version file have no lost and are not falsified; and then performing verification on data of a system area of the new version file, further determining that the data of the new version file have no lost and are not falsified.

In the above scheme, the step of writing the new version file further comprises: sleep the thread once every time writing one data segment.

In the above scheme, after the step of writing the new version file is completed, the method further comprises: according to the function result given after the writing is completed, judging whether the writing is successful.

In the above scheme, the verification for the new version comprises: executing the "Activate image" command from the OLT, performing verification on the data of the kernel area of the new version, and preliminarily determining that the data of the new version file are integral; performing verification on the data of the system area of the new version file, and further determining that the data of the new version file are integral; according to the results of booting kernel, preliminarily determining that the new version file can work normally; and according to the results of booting file system, further determining that the new version file can work normally and making the new version become a load image of reboot correctly.

In the above scheme, the method further comprises: judging whether data of the inactive image are valid, if yes, reporting that a version file of the inactive image is valid to the OLT, if not, reporting that the version file of the inactive image is invalid to the OLT.

A protecting system for abnormal conditions in the upgrade of a Gigabit Passive Optical Network (GPON) terminal, comprises a storage module, and further comprising: an analysis module, a writing module and a verification module; wherein,
The storage module is configured to: save a new version file downloaded from the Optical Line Terminal (OLT);
the analysis module is configured to: perform analysis in sequence of integrity, correctness and validity of the new version file saved by the storage module, and after determining that the new version file is integral, correct and valid, trigger the writing module;
the writing module is configured to: after receiving triggering information of the analysis module, write the new version file, and after the writing is completed, trigger the verification module;
the verification module is configured to: after receiving triggering information of the writing module, determine a verification for the new version according to of the "Activate image" command from the OLT, and complete the upgrade for the new version of the GPON ONU/ONT.

In the above scheme, the analysis module further comprises: a first analysis module and a second analysis module; wherein,
the first analysis module is configured to: judge whether the new version file saved by the storage module is integral and correct, reply the OLT "command processing error" if the file was integral and correct, otherwise when determining that the new version file is integral and correct, trigger the second analysis module;
the second analysis module is configured to: after receiving triggering information of the first analysis module, further judge whether the new version file is valid, reply the OLT "command processing error" if the file was invalid, otherwise when determining that the new version file is valid, trigger the writing module.

In the above scheme, the verification module further comprises: a first verification module, a load module and a second verification module; wherein,
the first verification module is configured to: according to a result of the writing module writing the new version file, judge whether the writing is successful, reply the OLT correspondingly according to a judging result, and when determining that the new version file is written successfully, trigger the load module;
the load module is configured to: after receiving triggering information of the first verification module, load the new version file which is judged by the first verification module to be written successfully according to the "Activate image" command from the OLT, and trigger the second verification module in the loading process;
the second verification module is configured to: after receiving triggering information of the load module, judge whether the new version is loaded successfully according to a result of the load module loading the new version.

In the above scheme, the system further comprises a judgment module, configured to: after the second verification module judges that the new version is loaded successfully, further judge whether the loaded new version is valid, and reply the OLT correspondingly according to a judging result.

In the scheme provided by the present invention, by configuring the download Integrality-Flag, a correct judgment of integrity of the downloaded data of the OLT can be guaranteed; by comparing a 32-bit Cyclic Redundancy Check (CRC32) value of the version data, correctness of the downloaded data can be guaranteed; by judging the size of the version file and the magic number in the file, that the downloaded version file is a legal version can be determined; and through a CRC of the data of the kernel area and file system area, that a situation of loss or falsification does not exist in the data of the downloaded version file can further be determined, which can not only guarantee validity of the version file, but also improve success rate and accuracy of the ONU/ONT upgrade, thereby improving maintainability and robustness of the ONU/ONT.

In the flash burning process of the present invention, a mode of sleeping the thread once every time writing one data segment is used, and part of time slices of Central Processing Units (CPU) are given up through the sleeping mode, thereby making a process which is responsible for mutually interacting with the OLT can reply the OLT smoothly and timely, to keep a normal operation of interactive links.

In the scheme of the present invention, whether the writing is successful is further judged after the writing is completed, which can further ensure that the active command is executed smoothly and guarantee that the ONU/ONT can load the new version successfully.

In the scheme of the present invention, integrity of the data of the kernel area and file system area of the new version is analyzed in the process of loading the new version, and every step of loading is judged, thereby further guaranteeing a success of loading the new version.

In the scheme of the present invention, meanwhile, validity of the data in the inactive image analyzed, which can avoid an occurrence of an abnormal condition that one version is invalid when the OLT requests the ONU/ONT to switch working versions in the subsequent system operation.

### Brief Description of Drawings

FIG. 1 is a schematic diagram of network topological structure of a typical GPON system according to the prior art.
FIG. 2 is a sequence diagram related to an ONU/ONT upgrade process refined according to the G.984.4 standard.
FIG. 3 is a flow diagram of the protecting method for abnormal conditions in the upgrade of a GPON terminal according to the present invention.
FIG. 4 is a flow diagram of a method for implementing a judgment that whether the downloaded version data of step 302 in the flow diagram shown in FIG. 3 are integral and correct according to the present invention.
FIG. 5 is a flow diagram of a method for implementing step 303 in the flow diagram shown in FIG. 3 according to the present invention.
FIG. 6 is a flow diagram of a method for implementing step 304 in the flow diagram shown in FIG. 3 according to the present invention.
FIG. 7 is a flow diagram of a method for implementing step 308 in the flow diagram shown in FIG. 3 according to the present invention.
FIG. 8 is a structural schematic diagram of the protecting system for abnormal conditions in the upgrade of a GPON terminal according to the present invention.

### Preferred Embodiments of the Present Invention

The basic idea of the present invention is to analyze in sequence the integrity, correctness and validity of a new version file downloaded to the ONU/ONT, and after determining that the new version file is integral, correct and valid, write the new version file; determine a verification for the new version according to an activation flow of an OLT, and complete the upgrade of the new version of the ONU/ONT.

The present invention will be further described in detail in combination with the accompany drawings and specific examples below.

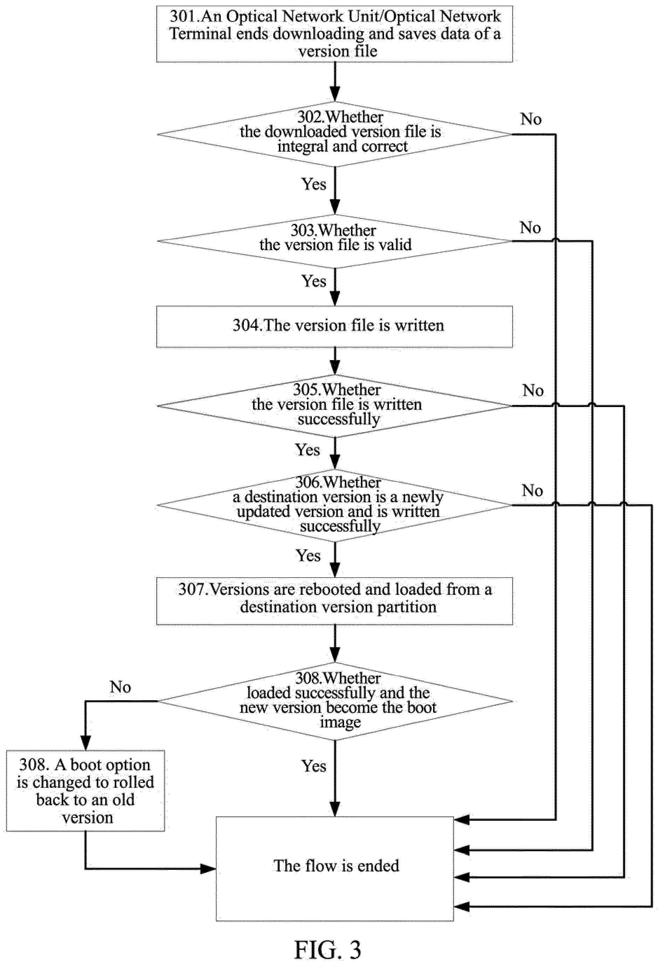

The protecting method for abnormal conditions in the upgrade of a GPON terminal according to the present invention is as shown in FIG. 3, and following steps are comprised.

In step 301, an ONU/ONT receives an End download command from the OLT, ends downloading and saves the version file.

In step 302, the ONU/ONT judges whether the downloaded version file is integral and correct, if the downloaded version file is integral and correct, executes step 303, and replies that the device is busy to the OLT at the same time; if the downloaded version file is incomplete or incorrect, replies that the command is processed incorrectly to the OLT, and ends the current processing flow.

In step 303, the ONU/ONT prepares to write the version file, starts a writing program, and further judges whether a version file to be written is valid, if yes, executes step 304; and if not, ends the writing process for a reason of illegal file, and ends the current process.

In step 304, the ONU/ONT writes the version file, replies that the device is busy to the End download command of the OLT at the same time, and then executes step 305.

In step 305, the ONU/ONT judges whether the version file is written successfully, if yes, executes step 306, and replies a success to the OLT at the same time; and if not, replies a failure to the OLT, and ends the current processing flow.

Here, after the writing of the version file is completed, a function result indicating a successful writing or a function result indicating an unsuccessful writing will be given directly.

In step 306, the ONU/ONT receives an Activate image command from the OLT, judges whether a destination version file is of a newly updated version, if the destination version file is of a newly updated version, further judges whether the newly updated version file is written successfully according to the function result given after the writing is completed, if yes, replies a success to the OLT, executes the Active command, and executes step 307, if not, replies a failure to the OLT, and ends the current process; and if the destination version file is not a newly updated version, replies a success to the OLT, executes the Activate command, and ends the current process.

In step 307, versions are rebooted and loaded from a destination version image.

In step 308, whether the loading of a new version file is successful is judged and the new version is made become a load image of reboot correctly, if the loading is successful, the current process is ended, and if the loading is unsuccessful, a boot option is changed and is rolled back to an old version image, and the process is ended.

Wherein, the method may also further comprise step 309: further judging whether an inactive image is valid, if yes, reporting that the inactive image is valid to the OLT, and ending the current process; and if not, reporting that the inactive image is invalid to the OLT, and ending the current process. Here, according to the G.984.4 standard, the ONU/ONT self has two versions image which can be used, therefore, except the newly updated version file, one version file which can be used is also stored in another partition and called as an old image, correspondingly, a partition storing the old version file is called as the inactive image.

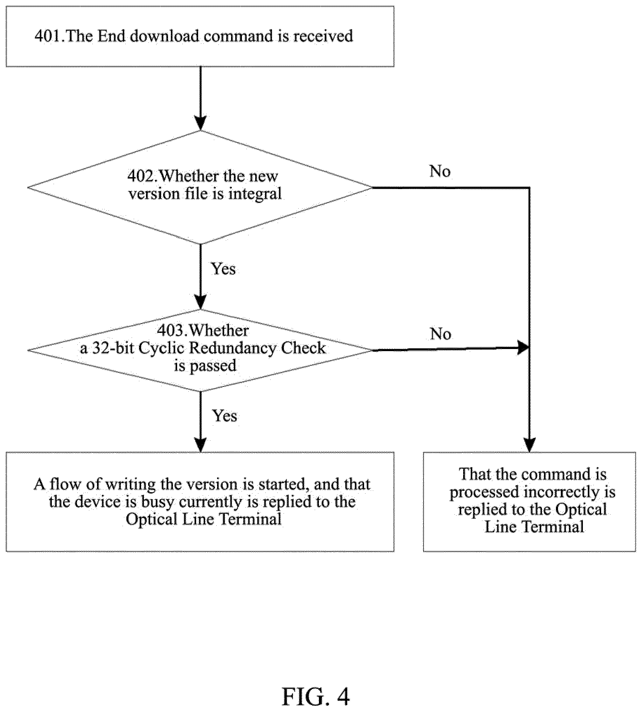

Wherein, the method for judging whether the new version file downloaded in step 302 is integral and correct is as shown in FIG. 4, and following steps are comprised.

In step 401, the ONU/ONT receives the End download command, and then executes step 402.

In step 402, the ONU/ONT judges whether the new version file is downloaded integrally, if yes, executes step 403, and if not, considers that data of the new version file are not integral, replies "command process error" to the OLT, ends the current process, and ignores the data of version file which may be downloaded by the OLT subsequently.

Here, judging whether the new version file is downloaded integrally is specifically: when received the "Start download" command , the ONU/ONT saving the Version Size (size of the version file) in the command, and setting an Integrality-Flag (flag for integrality of downloading) of the version file as False; after receiving the End download command, calculating the Version Size of the downloaded new version file to compare with the Version Size saved in advance, making a judgment according to a comparison result, if the two sizes are identical, setting the Integrality-Flag as True, which indicates that the new version file is downloaded integrally; and if the two sizes are different, setting the Integrality-Flag as False, which indicates that the new version file is not downloaded integrally.

In step 403, the ONU/ONT further judges whether the downloaded new version file passes the CRC32 checking, if yes, it indicates that data of the downloaded new version file are correct, the ONU/ONT starts a flow of writing the version, and replies that the device is busy currently to the OLT; and if not, it indicates that data of the downloaded new version file are incorrect, the ONU/ONT replies that the command is processed incorrectly to the OLT, ends the current process, and clear the data of version file which may be downloaded by the OLT subsequently.

Here, when calculating a CRC32 value of a local new version file, the ONU/ONT uses a combination of the size of the new version file in a Start download command received by the ONU/ONT and the received version data as an parameter for calculating the CRC32 value, but does not use a size of an actual new version file received in actual transmission as a basis.

When sending the End download command, meanwhile, the OLT informs the ONU/ONT of the CRC32 value of the downloaded version file, and compares the CRC32 value of the local version file of the ONU/ONT with the informed CRC32 value of the downloaded version file, if the two are identical, it is indicated that data of the downloaded new version file are correct, and if the two are different, it is indicated that data of the downloaded new version file are incorrect.

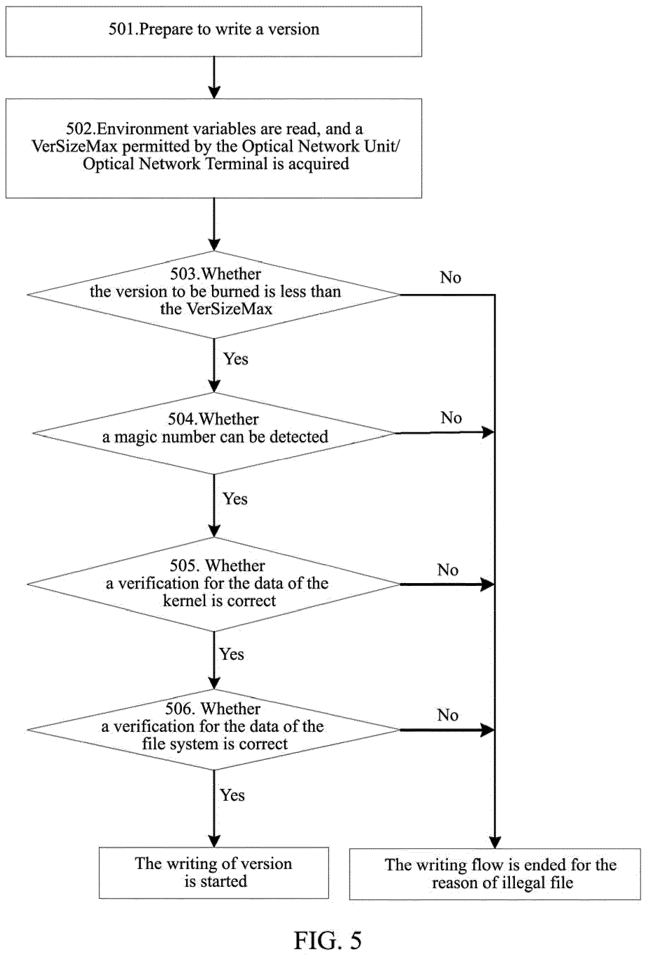

Wherein, as shown in FIG. 5, the step 303 can specifically comprise following steps.

In step 501, the ONU/ONT prepares to write the version file, and then executes step 502.

In step 502, the ONU/ONT reads environment variables of the system, and acquires a maximum value of a size of the new version file to be written permitted by the ONU/ONT.

Here, the maximum value of the size of the new version file to be written permitted by the ONU/ONT specifically refers to a VerSizeMax (maximum size for storing version file) permitted to be stored by a Flash of the ONU/ONT.

In step 503, the ONU/ONT judges whether the size of the new version file to be written is less than the VerSizeMax to determine whether the size of the new version file to be written is applicable, if the size of the new version file to be written is less than the VerSizeMax, executes step 504; and if the size of the new version file to be written is greater than the VerSizeMax, ends the burning flow for a reason of illegal file.

In step 504, the ONU/ONT detects the new version file to be written, further judges whether a magic number can be detected to determine whether the new version file is legal, if the magic number can be detected, executes step 505; and if the magic number can't be detected, ends the writing process for the reason of illegal file.

Here, the magic number is saved in a file header of the downloaded new version file, and is the special data in a fixed format to check whether the version files are legal.

In step 505, the ONU/ONT judges whether a verification for a data segment of a kernel area of the new version file to be written is correct, preliminarily determines whether data of the new version file have no lost or are falsified, if the verification is correct, executes step 506; and if the verification is incorrect, ends the burning process for the reason of illegal file.

Here, judging whether the verification for the data segment of the kernel area of the new version file to be written is correct is specifically: according to information of data of the kernel area of the new version file, calculating a CRC value of the data of the kernel area of the new version file, verifying the CRC value with the CRC value saved in the header of the kernel area, if the two are identical, indicating that the verification is correct, and if the two are different, indicating that the verification is incorrect; wherein a CRC code of the data of the kernel area is saved in the file header of the downloaded new version file.

In step 506, the ONU/ONT judges whether a verification for the data of the file system area of the new version file to be written is correct to further determine whether data of the new version file are not lost or falsified, if the verification is correct, it indicates that the version file is valid, and the ONU/ONT starts to write the version; and if the verification is incorrect, ends the writing flow for the reason of illegal file.

Here, judging whether the verification for the data of the file system area of the new version file to be written is correct is specifically: according to the information of data of the file system area of the new version file, calculating a CRC value of the data of the file system area, verifying the CRC value with the CRC saved in the header of the file system area, if the two are identical, it is indicated that the verification is correct, and if the two are different, it is indicated that the verification is incorrect; wherein, a CRC code of the data segment of the file system area is saved in the file header of the downloaded new version file.

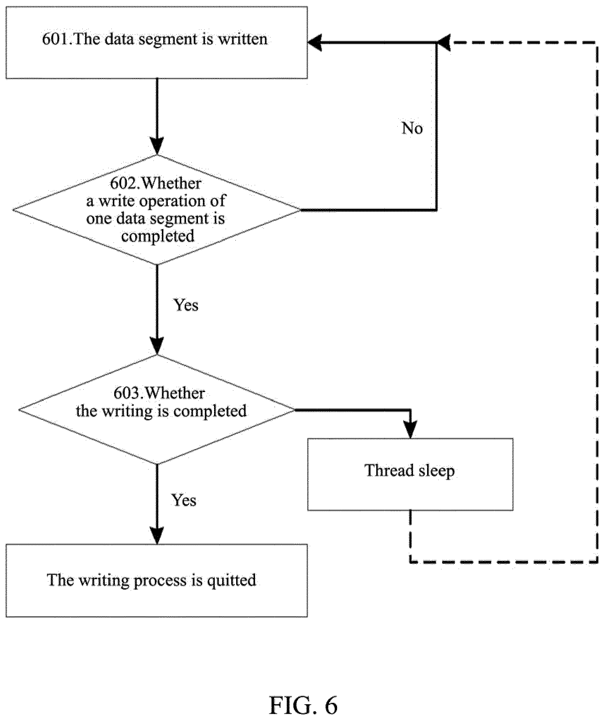

Wherein, as shown in FIG. 6, the step 304 specifically comprises following steps.

In step 601, the ONU/ONT writes the data segment of the new version file.

Here, a size of one data segment is set according to actual environments such as CPU dominant frequency, interactive timeout duration between the ONU/ONT and OLT, and Flash performance and so on.

In step 602, the ONU/ONT judges whether a write operation of one data segment is completed, if yes, executes step 603; and if not, executes step 601, and continues the write operation of the current data segment.

In step 603, the ONU/ONT further judges whether the writing of the new version file is completed according to the function result given after the writing is completed, if yes, quits the writing operation; and if not, sleep the thread.

Here, dormancy duration is set according to actual environments such as CPU dominant frequency, interactive timeout duration between the ONU/ONT and OLT, and Flash performance and so on.

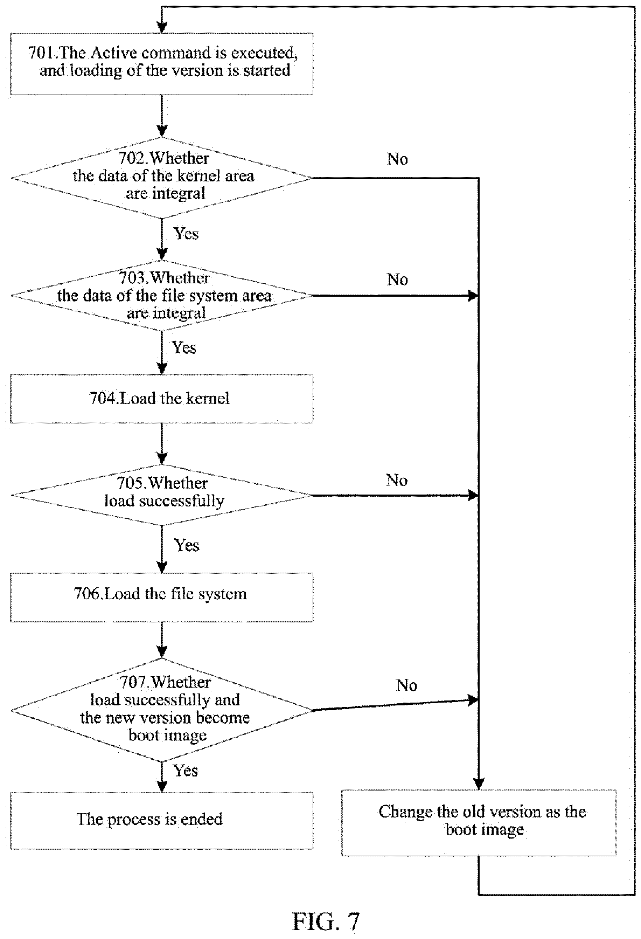

Wherein, as shown in FIG. 7, the step 308 can specifically comprise following steps.

In step 701, the ONU/ONT executes the "Activate image" command from the OLT, and starts to load the new version.

In step 702, the ONU/ONT checks the data of the kernel area of the new version and judges whether the data of the kernel area are integral, if yes, executes step 703, otherwise changes the boot image, and rolls back to the old version.

Here, judging whether the data of the kernel area is integral is specifically: according to information of data of the kernel area of the new version file, calculating a CRC value of the data of the kernel area of the new version, verifying the CRC value with the CRC value of the data of the kernel area carried by the new version, if the two are identical, indicating that the verification is correct, and if the two are different, indicating that the verification is incorrect.

In step 703, the ONU/ONT further checks the data of the file system area of the new version and judges whether the data of the file system area are integral, if yes, executes step 704, otherwise changes the boot image, and rolls back to the old version.

Here, judging whether the data of the file system area is integral is specifically: according to a size of data of the system area of the new version file, calculating a CRC value of the data segment of the file system area, verifying the CRC value with the CRC value of the data of the file system area carried by the new version, if the two are identical, indicating that the verification is correct, and if the two are different, indicating that the verification is incorrect.

In step 704, the ONU/ONT load the kernel of the new version, and then executes step 705.

In step 705, the ONU/ONT judges whether the kernel loaded successfully, if yes, executes step 706, otherwise changes the boot image, and rolls back to the old version.

Here, judging whether the kernel loaded successfully can be obtained directly from a monitoring system, if the kernel loaded successfully, it is indicated that the new version file can work normally, otherwise, it is indicated that the new version file can't work normally.

In step 706, the ONU/ONT load the file system of the new version, and then executes step 707.

In step 707, the ONU/ONT judges whether the file system of the new version loaded successfully and makes the new version become the boot image of the reboot, if the file system of the new version loaded successfully, ends the current process, otherwise changes the boot image, and rolls back to the old version.

Here, judging whether the file system loaded successfully can be obtained directly from the monitoring system, if the file system of the new version loaded successfully, it is further indicated that the new version file can work normally, otherwise, it is indicated that the new version file can't work normally.

The ONU/ONT in the above scheme can be collectively called as the GPON terminal.

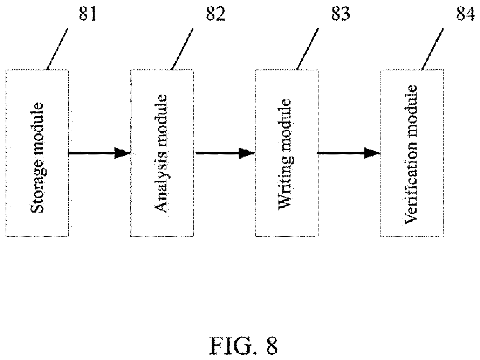

Based on the above method, and as shown in FIG. 8, a protecting system for abnormal conditions in the upgrade of a GPON terminal according to the present invention comprises: a storage module 81, an analysis module 82, a writing module 83 and a verification module 84; wherein,
the storage module 81 is configured to: save a new version file downloaded from the OLT, which is a flash or a memory stack area generally;
the analysis module 82 is configured to: perform analysis in sequence of integrity, correctness and validity of the new version file saved by the storage module 81, and after determining that the new version file is integral, correct and valid, trigger the writing module 83;
the writing module 83 is configured to: after receiving triggering information of the analysis module 82, write the new version file, replies that the device is busy to the OLT, and after the writing is completed, trigger the verification module 84;
the verification module 84 is configured to: after receiving triggering information of the writing module 83, determine a verification for the new version according to an activation flow of the OLT, and complete the upgrade for the new version of the GPON terminal.
Wherein, the analysis module 82 can also further comprise:
a first analysis module, configured to: judge whether the new version file saved by the storage module 81 is integral and correct, reply the OLT correspondingly according to a judging result, and when determining that the new version file is integral and correct, trigger a second analysis module;
the second analysis module, configured to: after receiving triggering information of the first analysis module, further judge whether the new version file is valid, reply the OLT correspondingly according to a judging result, and when determining that the new version file is valid, trigger the writing module 83.

Wherein, the verification module 84 can also further comprise:
a first verification module, configured to: according to a result of the writing module 83 writing the new version, judge whether the writing is successful, reply the OLT correspondingly according to a judging result, and when determining that the new version file is written successfully, trigger a load module;
the load module is configured to: after receiving triggering information of the first verification module, load the new version file which is judged by the first verification module to be written successfully according to an activation command sent by the OLT, and trigger the second verification module in the loading process;
the second verification module is configured to: after receiving triggering information of the load module, judge whether the new version is loaded successfully according to a result of the load module loading the new version.

Wherein, the device can also include a judgment module 85, configured to: after the second verification module judges that the new version is loaded successfully, judge whether an inactive partition version is valid, and reply the OLT correspondingly according to a judging result.

Wherein, the first analysis module is specifically configured to: according to a set Version Size, judge the integrity of the new version file, and according to the integral new version file, perform a CRC32, and judge the correctness of the new version file.

The second analysis module is specifically configured to: firstly according to a VerSizeMax of the version permitted to be stored by the Flash, determine that a size of the new version file to be written is suitable; next according to a magic number of the file, determine that the new version file is suitable; then verify data of a kernel area of the new version file, and determine that the data of the new version file are not lost or falsified; then verify data of a system area of the new version file, and further determine that the data of the new version file are not lost or falsified.

The writing module 83 is specifically configured to: write the new version file, and hibernate once every time completing the writing of one data segment of the new version file.

The second verification module is specifically configured to: firstly verify the data of the kernel area of the new version file to determine that the data of the new version are integral; next verify the data of the system area of the new version file to further determine that the data of the new version are integral; then according to a result mounted by the kernel, determine that the new version can work; then according to a result mounted by system files, further determine that the new version file can work normally.

Here, the specific processing process of each unit in the device of the present invention has been described in detail hereinbefore, which will not be repeated.

The above description is only the preferred examples of the present invention, which is not used to limit the protection scope of the present invention.

## Claims

1. A protecting method for abnormal conditions in an upgrade of a Gigabit Passive Optical Network, GPON, terminal, comprising:
performing analysis in sequence of integrity, correctness and validity of a new version file downloaded to the GPON terminal (302, 303), and after determining that the new version file is integral, correct and valid, writing the new version file (304);
determining a verification for the new version according to an activation flow of an Optical Line Terminal, OLT, and completing the upgrade for the new version of the GPON terminal;
**characterized in that** the verification for the new version comprises: the GPON terminal executing an "Activate image" command from the OLT (701), performing verification on the data of the kernel area of the new version (702), and preliminarily determining that the data of the new version file are integral; performing verification on the data of the file system area of the new version file (703), and further determining that the data of the new version file are integral; according to results loaded by a kernel, preliminarily determining that the new version file can work normally (705); and according to results loaded by the file system, further determining that the new version file can work normally and making the new version become a load image of reboot correctly (707).

2. The method according to claim 1, wherein, the analysis of integrity of the new version file comprises: saving a size of the new version file, and configuring a download Integrality-Flag of the new version file as False; after receiving a download completion notification, judging whether a size of the downloaded new version file is identical with a size of the saved new version file, if yes, configuring the download Integrality-Flag of the new version as True, and considering that the downloaded new version file is integral, if not, determining that data of the new version file are not integral, replying "command processing error" to the OLT, and the GPON terminal ending the current process.

3. The method according to claim 1, wherein, the analysis of validity of the new version file comprises: according to a maximum value of a new version file to be written permitted by the GPON terminal, determining that a size of the new version file to be written is suitable (501-503); according to a magic number in the file, determining a legality of the new version file (504); performing verification on data of a kernel area of the new version file, and preliminarily determining that the data of the new version file have no lost and are not falsified (505); and then performing verification on data of a file system area of the new version file, further determining that the data of the new version file have no lost and are not falsified (506).

4. The method according to claim 1, wherein, the step of writing the new version file (304) further comprises: sleep thread once every time writing one data segment.

5. The method according to any one of claims 1 to 4, wherein, after the step of writing the new version file is completed, the method further comprises: according to a function result given after the writing is completed, judging whether the writing is successful (305).

6. The method according to any one of claims 1 to 4, further comprising: judging whether data of an inactive image are valid, if yes, reporting that a version file of the inactive image is valid to the OLT, if not, reporting that the version file of the inactive image is invalid to the OLT.

7. A protecting system for abnormal conditions in the upgrade of a Gigabit Passive Optical Network, GPON, terminal, comprising a storage module (81), and further comprising: an analysis module (82), a writing module (83) and a verification module (84); wherein,
the storage module (81) is configured to: save a new version file downloaded from Optical Line Terminal, OLT;
the analysis module (82) is configured to: perform analysis in sequence of integrity, correctness and validity of the new version file saved by the storage module, and after determining that the new version file is integral, correct and valid, trigger the writing module;
the writing module (83) is configured to: after receiving triggering information of the analysis module, write the new version file, and after the writing is completed, trigger the verification module;
the verification module (84) is configured to: after receiving triggering information of the writing module, determine a verification for the new version according to an activation flow of the OLT, and complete the upgrade for the new version of the GPON terminal;
**characterized in that** the verification for the new version comprises: executing an "Activate image" command from the OLT, performing verification on the data of the kernel area of the new version, and preliminarily determining that the data of the new version file are integral; performing verification on the data of the file system area of the new version file, and further determining that the data of the new version file are integral; according to results loaded by a kernel, preliminarily determining that the new version file can work normally; and according to results loaded by the file system, further determining that the new version file can work normally and making the new version become a load image of reboot correctly.

8. The system according to claim 7, wherein, the analysis module (82) further comprises: a first analysis module and a second analysis module; wherein,
the first analysis module is configured to: judge whether the new version file saved by the storage module is integral and correct, reply the OLT correspondingly according to a judging result, and when determining that the new version file is integral and correct, trigger the second analysis module;
the second analysis module is configured to: after receiving triggering information of the first analysis module, further judge whether the new version file is valid, reply the OLT correspondingly according to a judging result, and when determining that the new version file is valid, trigger the writing module.

9. The system according to claim 7 or 8, wherein, the verification module (84) further comprises: a first verification module, a load module and a second verification module; wherein,
the first verification module is configured to: according to a result of the writing module writing the new version file, judge whether the writing is successful, reply the OLT correspondingly according to a judging result, and when determining that the new version file is written successfully, trigger the load module;
the load module is configured to: after receiving triggering information of the first verification module, load the new version file which is judged by the first verification module to be written successfully according to an active command sent by the OLT, and trigger the second verification module in the loading process;
the second verification module is configured to: after receiving triggering information of the load module, judge whether the new version is loaded successfully according to a result of the load module loading the new version.

10. The system according to claim 9, wherein, the system further comprises a judgment module, configured to: after the second verification module judges that the new version is loaded successfully, further judge whether the loaded new version is valid, and reply the OLT correspondingly according to a judging result.

## Patentansprüche

1. Schutzverfahren für anormale Bedingungen beim Upgrade eines Gigabit-Passiv-Optical-Network-(GPON)-Terminals, umfassend:
Durchführen einer Analyse in der Reihenfolge Vollständigkeit, Korrektheit und Gültigkeit einer neuen Versionsdatei, die auf das GPON-Terminal (302, 303) heruntergeladen wurde, und nach dem Bestimmen, dass die neue Versionsdatei vollständig, korrekt und gültig ist, Schreiben der neuen Versionsdatei (304);
Bestimmen einer Verifizierung der neuen Version gemäß einem Aktivierungsfluss eines optischen Leitungsendgerätes (Optical Line Terminal, OLT) und Abschließen des Upgrades für die neue Version des GPON-Terminals;
**dadurch gekennzeichnet, dass** die Verifizierung der neuen Version umfasst: Ausführen eines Befehls "Bild aktivieren" vom OLT (701) durch das GPON-Terminal, Ausführen einer Verifizierung der Daten des Kernelbereichs der neuen Version (702) und vorläufiges Bestimmen, ob die Daten der neuen Versionsdatei vollständig sind; Ausführen einer Verifizierung der Daten des Dateisystembereichs der neuen Versionsdatei (703) und ferner Bestimmen, ob die Daten der neuen Versionsdatei vollständig sind; gemäß den von einem Kernel geladenen Ergebnissen vorläufiges Bestimmen, ob die neue Versionsdatei normal funktionieren kann (705); und gemäß vom Dateisystem geladenen Ergebnissen ferner Bestimmen, dass die neue Versionsdatei normal funktionieren kann und Veranlassen, dass die neue Version korrekt zu einem Lade-Bild des Neustarts wird (707).

2. Verfahren nach Anspruch 1, wobei die Analyse der Integrität der neuen Versionsdatei umfasst: Speichern einer Größe der neuen Versionsdatei und Konfigurieren eines Download-Vollständigkeits-Flags der neuen Versionsdatei als Falsch; nach Erhalt einer Download-Abschlussmeldung Beurteilen, ob eine Größe der heruntergeladenen neuen Versionsdatei mit einer Größe der gespeicherten neuen Versionsdatei identisch ist, wenn ja, Konfigurieren des Download-Vollständigkeits-Flags der neuen Version als Richtig und Annehmen, dass die heruntergeladene neue Versionsdatei vollständig ist, wenn nicht, Bestimmen, dass die Daten der neuen Versionsdatei nicht vollständig sind, Ausgeben der Antwort "Befehlsverarbeitungsfehler" an das OLT und Beenden des aktuellen Prozesses durch das GPON-Terminal.

3. Verfahren nach Anspruch 1, wobei die Analyse der Gültigkeit der neuen Versionsdatei umfasst: gemäß einem Maximalwert einer vom GPON-Terminal erlaubten, zu schreibenden neuen Versionsdatei, Bestimmen, ob eine Größe der zu schreibenden neuen Versionsdatei geeignet ist (501-503); gemäß einer magischen Zahl in der Datei, Bestimmen einer Legalität der neuen Versionsdatei (504); Durchführen einer Verifizierung von Daten eines Kernelbereichs der neuen Versionsdatei und vorläufiges Bestimmen, ob die Daten der neuen Versionsdatei keine Verluste aufweisen und nicht gefälscht sind (505); und dann Durchführen einer Verifizierung von Daten eines Dateisystembereichs der neuen Versionsdatei, ferner Bestimmen, dass die Daten der neuen Versionsdatei keinen Verlust aufweisen und nicht gefälscht sind (506).

4. Verfahren nach Anspruch 1, wobei der Schritt des Schreibens der neuen Versionsdatei (304) ferner umfasst: Thread einmal beim Schreiben eines Datensegments stilllegen.

5. Verfahren nach einem der Ansprüche 1 bis 4, wobei das Verfahren, nachdem der Schritt des Schreibens der neuen Versionsdatei abgeschlossen ist, ferner umfasst: gemäß einem Funktionsergebnis, das nach Abschluss des Schreibens gegeben ist, Beurteilen, ob das Schreiben erfolgreich ist (305).

6. Verfahren nach einem der Ansprüche 1 bis 4, ferner umfassend: Beurteilen, ob Daten eines inaktiven Bildes gültig sind, wenn ja, Melden, dass eine Versionsdatei des inaktiven Bildes für das OLT gültig ist, wenn nicht, Melden, dass die Versionsdatei des inaktiven Bildes für das OLT ungültig ist.

7. Schutzsystem für anormale Bedingungen beim Upgrade eines Gigabit-Passive-Optical-Network-Terminals (GPON-Terminals), umfassend ein Speichermodul (81), und ferner umfassend: ein Analysemodul (82), ein Schreibmodul (83) und ein Verifizierungsmodul (84); wobei
das Speichermodul (81) dazu konfiguriert ist, eine neue Versionsdatei zu speichern, die vom optischen Leitungsendgerät (OLT) heruntergeladen ist;
das Analysemodul (82) dazu konfiguriert ist, eine Analyse in der Reihenfolge Vollständigkeit, Korrektheit und Gültigkeit der neuen Versionsdatei, die durch das Speichermodul gespeichert wurde, durchzuführen, und nach dem Bestimmen, dass die neue Versionsdatei vollständig, korrekt und gültig ist, Auslösen des Schreibmoduls;
das Schreibmodul (83) dazu konfiguriert ist, nach dem Empfangen von Auslöserinformationen des Analysemoduls die neue Versionsdatei zu schreiben und nach Abschluss des Schreibens das Verifizierungsmodul auszulösen;
das Verifizierungsmodul (84) dazu konfiguriert ist, nach dem Empfangen von Auslöserinformationen des Schreibmoduls eine Verifizierung der neuen Version gemäß einem Aktivierungsfluss des OLT zu bestimmen und das Upgrade für die neue Version des GPON-Terminals abzuschließen;
**dadurch gekennzeichnet, dass** die Verifizierung der neuen Version umfasst: Ausführen eines Befehls "Bild aktivieren" vom OLT, Durchführen einer Verifizierung der Daten des Kernelbereichs der neuen Version und vorläufiges Bestimmen, ob die Daten der neuen Versionsdatei vollständig sind; Durchführen einer Verifizierung der Daten des Dateisystembereichs der neuen Versionsdatei und ferner Bestimmen, ob die Daten der neuen Versionsdatei vollständig sind; gemäß den von einem Kernel geladenen Ergebnissen vorläufiges Bestimmen, ob die neue Versionsdatei normal funktionieren kann; und gemäß den vom Dateisystem geladenen Ergebnissen ferner Bestimmen, ob die neue Versionsdatei normal funktionieren kann und Veranlassen, dass die neue Version korrekt zu einem Lade-Bild des Neustarts wird.

8. System nach Anspruch 7, wobei das Analysemodul (82) ferner umfasst: ein erstes Analysemodul und ein zweites Analysemodul; wobei
das erste Analysemodul dazu konfiguriert ist, zu beurteilen, ob die vom Speichermodul gespeicherte neue Versionsdatei vollständig und korrekt ist, dem OLT entsprechend einem Beurteilungsergebnis zu antworten, und wenn bestimmt wird, dass die neue Versionsdatei vollständig und korrekt ist, das zweite Analysemodul auszulösen;
das zweite Analysemodul dazu konfiguriert ist, nach dem Empfangen von Auslöserinformationen des ersten Analysemoduls ferner zu beurteilen, ob die neue Versionsdatei gültig ist, dem OLT entsprechend einem Beurteilungsergebnis zu antworten, und wenn bestimmt wird, dass die neue Versionsdatei gültig ist, das Schreibmodul auszulösen.

9. System nach Anspruch 7 oder 8, wobei das Verifizierungsmodul (84) ferner umfasst: ein erstes Verifizierungsmodul, ein Lademodul und ein zweites Verifizierungsmodul; wobei
das erste Verifizierungsmodul dazu konfiguriert ist, gemäß einem Ergebnis des Schreibmoduls, das die neue Versionsdatei schreibt, zu beurteilen, ob das Schreiben erfolgreich ist, dem OLT entsprechend einem Beurteilungsergebnis zu antworten, und wenn bestimmt wird, dass die neue Versionsdatei erfolgreich geschrieben ist, das Lademodul auszulösen;
das Lademodul dazu konfiguriert ist, nach dem Empfangen von Auslöserinformationen des ersten Verifizierungsmoduls die neue Versionsdatei zu laden, die vom ersten Verifizierungsmodul gemäß einem vom OLT gesendeten aktiven Befehl als erfolgreich geschrieben beurteilt wird, und das zweite Verifizierungsmodul im Ladevorgang zu auszulösen;
das zweite Verifizierungsmodul dazu konfiguriert ist, nach dem Empfangen von Auslöserinformationen des Lastmoduls zu beurteilen, ob die neue Version gemäß einem Ergebnis des Lademoduls, das die neue Version lädt, erfolgreich geladen ist.

10. System nach Anspruch 9, wobei das System ferner ein Beurteilungsmodul umfasst, das dazu konfiguriert ist, nachdem das zweite Verifizierungsmodul urteilt, dass die neue Version erfolgreich geladen wurde, ferner zu beurteilen, ob die geladene neue Version gültig ist, und dem OLT entsprechend gemäß einem Beurteilungsergebnis zu antworten.

## Revendications

1. Procédé de protection pour des conditions anormales dans une mise à niveau d'un terminal de réseau optique passif gigabit, GPON, le procédé comprenant les étapes suivantes :
exécuter une analyse successive de l'intégrité, de l'exactitude et de la validité d'un fichier de nouvelle version téléchargé vers le terminal de GPON (302, 303) et, après avoir déterminé que le fichier de nouvelle version est complet, exact et valide, écrire le fichier de nouvelle version (304) ;
déterminer une vérification de la nouvelle version selon un flux d'activation d'un terminal de ligne optique, OLT, et achever la mise à niveau de la nouvelle version du terminal de GPON;
**caractérisé en ce que** la vérification de la nouvelle version comprend les étapes suivantes : le terminal de GPON exécute une commande « Activation de l'image » à partir de l'OLT (701), exécute la vérification sur les données de la zone de noyau de la nouvelle version (702) et détermine préalablement que les données du fichier de nouvelle version sont complètes ; exécute la vérification sur les données de la zone du système de fichiers du fichier de nouvelle version (703) et détermine en outre que les données du fichier de nouvelle version sont complètes ; conformément aux résultats chargés par un noyau, détermine préalablement que le fichier de nouvelle version peut fonctionner normalement (705) ; et conformément aux résultats chargés par le système de fichier, détermine en outre que le fichier de nouvelle version peut fonctionner normalement et fait de la nouvelle version une image de chargement de redémarrage exacte (707).

2. Procédé selon la revendication 1, dans lequel l'analyse de l'intégrité du fichier de nouvelle version comprend les étapes suivantes : sauvegarder une taille du fichier de nouvelle version et configurer un drapeau de l'intégralité du téléchargement du fichier de nouvelle version comme étant Faux ; après la réception d'une notification d'achèvement de téléchargement, déterminer si une taille du fichier de nouvelle version téléchargé est identique à une taille du fichier de nouvelle version sauvegardé, si tel est le cas, configurer le drapeau de l'intégralité du téléchargement de la nouvelle version comme étant Vrai et considérer que le fichier de nouvelle version téléchargé est complet, si tel n'est pas le cas, déterminer que les données du fichier de nouvelle version ne sont pas complètes, répondre « erreur de traitement de commande » à l'OLT, puis le terminal de GPON achève le processus en cours.

3. Procédé selon la revendication 1, dans lequel l'analyse de la validité du fichier de nouvelle version comprend les étapes suivantes : conformément à une valeur maximum d'un fichier de nouvelle version à écrire autorisé par le terminal de GPON, déterminer qu'une taille du fichier de nouvelle version à écrire est appropriée (501 à 503) ; conformément à un nombre magique dans le fichier, déterminer une légalité du fichier de nouvelle version (504) ; exécuter la vérification sur les données d'une zone de noyau du fichier de nouvelle version et déterminer préalablement que les données du fichier de nouvelle version ne présentent aucune perte et ne sont pas falsifiées (505) ; puis exécuter la vérification sur les données d'une zone du système de fichiers du fichier de nouvelle version et déterminer en outre que les données du fichier de nouvelle version ne présentent aucune perte et ne sont pas falsifiées (506).

4. Procédé selon la revendication 1, dans lequel l'étape d'écriture du fichier de nouvelle version (304) comprend en outre : la mise en attente du fil d'exécution à chaque moment d'écriture d'un segment de données.

5. Procédé selon l'une quelconque des revendications 1 à 4, dans lequel, une fois que l'étape d'écriture du fichier de nouvelle version est achevée, le procédé comprend en outre l'étape suivante : conformément à un résultat de fonction donné après que l'écriture est achevée, déterminer si l'écriture est un succès (305).

6. Procédé selon l'une quelconque des revendications 1 à 4, comprenant en outre les étapes suivantes : déterminer si les données d'une image inactive sont valides, si tel est le cas, signaler à l'OLT qu'un fichier de version de l'image inactive est valide, si tel n'est pas le cas, signaler à l'OLT que le fichier de version de l'image inactive est invalide.

7. Système de protection pour des conditions anormales dans la mise à niveau d'un terminal de réseau optique passif gigabit, GPON, comprenant un module de mémoire (81) et comprenant en outre : un module d'analyse (82), un module d'écriture (83) et un module de vérification (84) ;
le module de mémoire (81) étant configuré pour : sauvegarder un fichier de nouvelle version téléchargé à partir du terminal de ligne optique, OLT ;
le module d'analyse (82) étant configuré pour : exécuter une analyse successive de l'intégrité, de l'exactitude et de la validité du fichier de nouvelle version sauvegardé par le module de mémoire et, après avoir déterminé que le fichier de nouvelle version est complet, exact et valide, lancer le module d'écriture ;
le module d'écriture (83) étant configuré pour : après avoir reçu des informations de lancement du module d'analyse, écrire le fichier de nouvelle version et, une fois que l'écriture est achevée, lancer le module de vérification ;
le module de vérification (84) étant configuré pour : après avoir reçu des informations de lancement du module d'écriture, déterminer une vérification de la nouvelle version selon un flux d'activation de l'OLT et achever la mise à niveau de la nouvelle version du terminal de GPON ;
**caractérisé en ce que** la vérification de la nouvelle version comprend les étapes suivantes : exécuter une commande « Activation de l'image » à partir de l'OLT, exécuter la vérification sur les données de la zone de noyau de la nouvelle version et déterminer préalablement que les données du fichier de nouvelle version sont complètes ; exécuter la vérification sur les données de la zone du système de fichiers du fichier de nouvelle version et déterminer en outre que les données du fichier de nouvelle version sont complètes ; conformément aux résultats chargés par un noyau, déterminer préalablement que le fichier de nouvelle version peut fonctionner normalement ; et conformément aux résultats chargés par le système de fichier, déterminer en outre que le fichier de nouvelle version peut fonctionner normalement et faire de la nouvelle version une image de chargement de redémarrage exacte.

8. Système selon la revendication 7, dans lequel le module d'analyse (82) comprend en outre : un premier module d'analyse et un second module d'analyse ;
le premier module d'analyse étant configuré pour : déterminer si le fichier de nouvelle version sauvegardé par le module de mémoire est complet et exact, répondre à l'OLT en conséquence selon un résultat de détermination et, au moment de déterminer que le fichier de nouvelle version est complet et exact, lancer le second module d'analyse ;
le second module d'analyse étant configuré pour : après avoir reçu des informations de lancement du premier module d'analyse, déterminer en outre si le fichier de nouvelle version est valide, répondre à l'OLT en conséquence selon un résultat de détermination et, au moment de déterminer que le fichier de nouvelle version est valide, lancer le module d'écriture.

9. Système selon la revendication 7 ou 8, dans lequel le module de vérification (84) comprend en outre : un premier module de vérification, un module de chargement et un second module de vérification ;
le premier module de vérification étant configuré pour : conformément à un résultat du module d'écriture, écrire le fichier de nouvelle version, déterminer si l'écriture est un succès, répondre à l'OLT en conséquence selon un résultat de détermination et, au moment de déterminer que le fichier de nouvelle version est écrit avec succès, lancer le module de chargement ;
le module de chargement étant configuré pour : après avoir reçu des informations de lancement du premier module de vérification, charger le fichier de nouvelle version qui est déterminé par le premier module de vérification comme étant écrit avec succès conformément à une commande active envoyée par l'OLT et lancer le second module de vérification dans le processus de chargement ;
le second module de vérification étant configuré pour : après avoir reçu des informations de lancement du module de chargement, déterminer si la nouvelle version est chargée avec succès selon un résultat du module de chargement chargeant la nouvelle version.

10. Système selon la revendication 9, le système comprenant en outre un module de détermination, configuré pour : après que le second module de vérification a déterminé que la nouvelle version est chargée avec succès, déterminer en outre si la nouvelle version chargée est valide et répondre à l'OLT en conséquence selon un résultat de détermination.
